# EUROPEAN PATENT APPLICATION

(11) **EP 2 047 939 A1**
(43) Date of publication of application: **15.04.2009**
(21) Application number: 07790323.5
(22) Date of filing: 02.08.2007
(51) Int. Cl.: B23K 26/34, B23K 26/32, B23K 31/00

(54) **EROSION PREVENTIVE METHOD AND MEMBER WITH EROSION PREVENTIVE SECTION**

(30) Priority: 02.08.2006 JP 2006211496; 13.10.2006 JP 2006280711
(71) Applicant: Kabushiki Kaisha Toshiba, Minato-ku Tokyo 105-8001 (JP)
(72) Inventor: KAMIMURA, Kenji, Minato-ku Tokyo 105-8001 (JP); SHIIHARA, Katsunori, Minato-ku Tokyo 105-8001 (JP); MURAKAMI, Itaru, Minato-ku Tokyo 105-8001 (JP); ASAI, Satoru, Minato-ku Tokyo 105-8001 (JP)
(74) Representative: Kramer - Barske - Schmidtchen
(86) International application number: PCT/JP2007/000834
(87) International publication number: WO 2008/015795

(57) **Abstract**

A method is provided, which ensures reliability during manufacture and in the use environment, and allows affording erosion prevention capability in an inexpensive manner, to an erosion-susceptible portion such as turbine rotor blades. An erosion preventive section 4, comprising a lower layer (low-hardness layer) 2 of an austenitic material, and an upper layer (hard layer) 3 of a hard material, such as stellite, harder than the low-hardness layer 2, is formed by laser build-up welding on a portion, which is susceptible to erosion caused by liquid droplets and solid particles in a use environment, of a target member 1 such as a turbine rotor blade. Laser build-up welding is carried out through irradiation of a laser beam from a laser light source 6 while a welding material supply means 5 supplies an austenitic material and a hard material in the form of, for instance, a rod, powder or the like.

## Description

### TECHNICAL FIELD

The present invention relates to a method for preventing erosion at portions of various kinds of member having portions that are susceptible to erosion caused by liquid droplets and solid particles in a use environment, and more particularly, relates to an erosion prevention method for turbine blades and the like that are used in turbine equipment.

### BACKGROUND ART

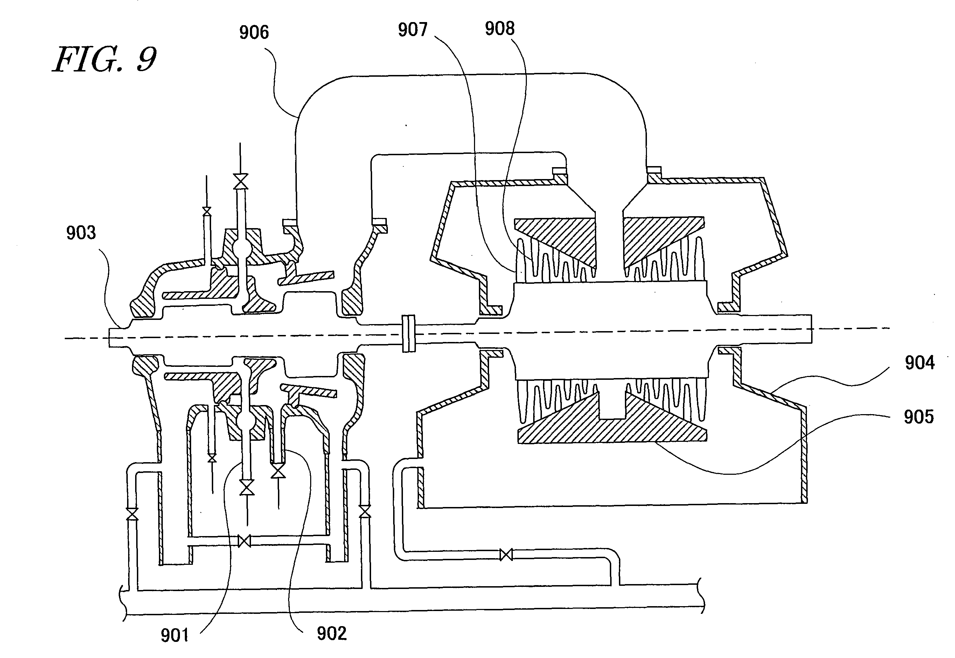

Members such as turbine blades are ordinarily used in turbine equipment. Fig. 9 is a cross-sectional diagram illustrating the structure of a steam turbine. In Fig. 9, the reference numeral 901 denotes a main steam pipe, 902 denotes a reheat steam pipe, 903 denotes a turbine rotor, 904 denotes a low-pressure outer casing, and 906 denotes a crossover pipe. A low-pressure inner casing 905 is housed in the low-pressure outer casing 904, and turbine rotor blades (turbine moving blades) 907 and turbine stator blades 908 are disposed in the interior of the low-pressure inner casing 905.

Members such as the turbine rotor blades 907 and the turbine stator blades 908 that are used in turbine equipment are exposed to an erosive environment in which the members are susceptible to erosion caused by water droplets in the steam and by fine dust from oxide scale. In particular, water droplets can cause substantial erosion of rear-stage turbine blades, where such water droplets are mixed into the steam for turbine driving. Also, turbine blades of substantial blade length are used in the blade rows at the rear of the turbine. The peripheral speed of the blades is consequently higher there, which makes the erosive environment yet harsher. Erosion of turbine blades is also problematic on account of blade thinning brought about by erosion. Fatigue breakdown originating at an erosion site is a cause of accident in older steam turbines, and thus the risk of fatigue breakdown has become a most pressing concern.

Various erosion preventive measures have been implemented in order to ensure safety in such members susceptible to erosion, for instance turbine blades, by increasing the durability of the members. In particular, there have been proposed methods in which the turbine blades are locally hardened, by flame or high frequency, at portions where erosion is anticipated; methods that involve attaching, by brazing or welding, a forged part of a hard material such as stellite, shaped as a blade; and methods that involve direct build-up welding onto the main body of the blade, by plasma welding.

Low heat-input build-up welding methods have also been proposed in recent years, the methods using a high energy-density heat source, yielding 105 W·cm² or greater, such as electron beams or laser beams (for instance, Patent document 1). Among these methods, welding using electron beams has a solid track record in the prevention of erosion in turbine blades. Welding of forged stellite onto turbine rotor blades has been actively resorted to since the 1970s. Experimental research on welding by laser, in which a stellite layer 1 to 2 mm thick is overlaid onto the blade surface, has been underway since the 90's.

Build-up welding using electron beams or laser beams entails low heat input, and hence deterioration and deformation of the member can be kept to a minimum. Moreover, build-up welding involves only the formation of a build-up portion on the member. The load placed on the member is therefore small, and thus build-up welding is effective as a means for inexpensively affording erosion preventive capability to a member. Specifically, there have also been attempts at direct build-up welding of stellite, which is a cobalt-base hard material, onto a blade-shaped matrix, as disclosed in Patent document 1.

Patent document 1: Japanese Patent Application Laid-open No. H09-314364

As described above, methods for preventing erosion of members that are susceptible to erosion are one indispensable form of technology, always open to improvement, for increasing the durability of such members, and ensuring the stability and safety of equipment into which the members are built. In the case of turbine blades exposed to a harsh erosive environment, in particular, sufficient erosion countermeasures are required against erosion occurring in portions of high peripheral speed, in the vicinity of the tips of the turbine blades, portions of large local surface area per volume, such as peripheral edge portions, or portions where the member is thin.

Among the above, there is a trend towards thinner blades in turbine blades having a substantial blade length, with a view to reducing member weight. High-strength materials are used more often as the members become thinner. High-strength materials contribute to reducing member weight by making the member thinner, but are more difficult to weld, which is disadvantageous. For instance, the manufacture of a thin turbine blade of thickness not greater than 10 mm, using high-strength steel, may result in degradation of material characteristics on account of the large heat input afforded to such a thin member during hardening and tempering. Also, a thinner turbine blade may greatly influence turbine performance owing to deformation, however small, of the blade. Greater attention must be devoted, therefore, to erosion prevention.

Other than steels having the strength thereof adjusted by hardening and/or tempering to obtain a high-strength material, there may also be used precipitation hardened steels such as 17-4PH. However, no improvement in hardness by tempering can be envisaged in turbine blades using precipitation hardened steels, since member strength drops substantially when the member is treated at a temperature of 800° or higher, for instance during brazing. The inherent characteristics of the material fail thus to be brought out.

Widely known erosion prevention procedures include procedures in which a forged part of a hard material such as stellite, shaped as a blade, is attached by brazing or welding onto a portion where an erosion countermeasure is required. Such procedures, however, are problematic on account of the extreme cost of cobalt-base stellite forged parts that are used as the hard material. Moreover, groove cutting is difficult on stellite, which has high machining costs. This has been therefore one of the factors driving up costs in turbine blade manufacturing.

A build-up welding method such as the one disclosed in Patent document 1, using high-density energy such as electron beams or laser beams, may be a conceivable way of solving the problems posed by welding methods in which heat input is substantial, namely the problem of material deterioration and deformation, as well as the problem of increased costs.

However, conventional build-up welding methods have the following problems. Specifically, stellite comprises ordinarily a considerable amount of carbon, of about 1.0wt%. As a result, a complex carbon dilution layer forms through mixing of the stellite layer and the matrix during welding, even with low heat input. This carbon dilution layer is undesirable in welding operations, as it may result in high-temperature cracking at build-up welded portions.

In addition to the problem posed by the formation of the carbon dilution layer, the residual stresses (tensile residual stresses) caused by contraction during build-up welding increase as the stellite build-up amount becomes greater. These residual stresses, which are difficult to remedy significantly through heat treatment after welding, may give rise to breakage in the form of peeling of the end of the build-up portion, or cracking at the weld metal portions, in the environment where the turbine operates.

When stellite is build-up welded by laser, the hardness of stellite weld metal portions becomes extremely large compared to that of ordinary forged parts. When using stellite No. 6, for instance, the Rockwell C scale hardness of a forged part is of about 35 to 40, whereas the hardness of a build-up welded portion formed using laser exhibits a higher value, of 50 or more. That is, build-up welded portions formed using laser are extremely hard, and hence cracking susceptibility in the welded portions is likewise high. A rise in the hardness of the build-up welded portions is accompanied by an increase in strength, but also by a drop in ductility and toughness and toughness. That is, the hardness of the build-up welded portions promotes rather the occurrence of cracking in weld metal portions and breakage in the form of peeling of the end of the build-up portion.

Thus, conventional art has been looking forward to the development of erosion preventive technologies having good working efficiency and which should allow preventing erosion in members with erosion-susceptible portions, such as turbine blades, in an inexpensive manner, with no cracking or the like occurring at the erosion prevention portions.

### DISCLOSURE OF THE INVENTION

In the light of the above, it is an object of the present invention to provide an erosion prevention method, excellent in economy and reliability, that allows affording, reliably and inexpensively, an erosion preventive capability to a member, for instance a turbine blade, having an erosion-susceptible portion, such that the erosion prevention capability can be stably brought out from manufacture through to use. It is a further object of the present invention to provide a member comprising a stable and inexpensive erosion preventive section obtained in accordance with such a method.

To attain the above goal, a first erosion prevention method of the present invention is a method for preventing erosion in a member used in an erosive environment, the method comprising: providing an erosion preventive section, which has a multilayer structure, on a matrix of an erosion prevention target portion of a target member, through formation of a lower layer of an austenitic material and an upper layer of a material harder than the lower layer, by build-up welding in use of high-density energy irradiation.

A second erosion prevention method of the present invention is a method for preventing erosion in a member used in an erosive environment, the method comprising: providing an erosion preventive section by replacing locally part of the member with a hard layer that is formed by build-up welding, through fusion of a powder of a hard material by high-density energy irradiation.

Further, a member comprising an erosion preventive section of the present invention is a member having formed thereon an erosion preventive section by one of the above erosion prevention methods.

The first erosion prevention method of the present invention ensures reliability during manufacture and in the use environment, and allows affording erosion prevention capability in an inexpensive manner, by interposing an austenitic layer between the matrix of a target member and a hard layer, through build-up welding using high-density energy irradiation, at a portion susceptible to erosion caused by liquid droplets and solid particles in the environment in which the target member is used, without forming the hard layer directly on the matrix of the target member.

The second erosion prevention method of the present invention allows locally replacing the material of a member by a hard layer, by forming a hard layer onto part of the member that is used in an erosive environment, through build-up welding of a powder of a hard material that is fused by high-density energy irradiation. An erosion preventive section can thus be provided easily at a desired region, and hence the second erosion prevention method of the present invention allows reducing manufacturing costs significantly, as compared with welding of an expensive forged part of a hard material.

### BRIEF DESCRIPTION OF THE DRAWINGS

Fig. 1(a) is an image diagram illustrating an erosion prevention method according to a first embodiment of the present invention;
Fig. 1(b) is a schematic cross-sectional diagram of Fig. 1(a) viewed in the direction of arrow A;
Fig. 2(a) is a schematic cross-sectional diagram illustrating a specimen manufactured in accordance with the first embodiment;
Fig. 2(b) is a diagram illustrating results of carbon analysis in the cross-sectional structure, from the matrix to a hard layer, along line AB of Fig. 2(a);
Fig. 3(a) is a graph illustrating comparatively maximum residual stress in a case where no low-hardness layer is provided and a case in which a low-hardness layer is provided, to illustrate the residual-stress reducing effect obtained by the low-hardness layer of the first embodiment;
Fig. 3(b) is a schematic perspective-view diagram illustrating a specimen used for residual stress measurement and illustrating the measurement position of the specimen;
Fig. 4 is a diagram depicting the results of a fatigue crack propagation test, for illustrating the crack propagation delaying effect or propagation preventing effect obtained by the low-hardness layer of the first embodiment;
Fig. 5(a) is a schematic cross-sectional diagram illustrating a specimen manufactured as a modification of the first embodiment;
Fig. 5(b) is a graph illustrating evaluation results on the cross-sectional hardness of a specimen having the erosion preventive section illustrated in Fig. 5(a);
Fig. 6 illustrates an example of an erosion prevention method according to a second embodiment of the present invention; in which Fig. 6 (a) is a perspective-view diagram illustrating a turbine rotor blade;
Fig. 6(b) is an enlarged diagram illustrating the tip portion to turbine rotor blade;
Fig. 6(c) is a perspective-view diagram illustrating an erosion preventive section re-formed after cutting away a target portion at the tip of the turbine rotor blade;
Fig. 7(a) is an image diagram illustrating an erosion prevention method according to the second embodiment of the present invention, in which Fig. 7(b) is a schematic cross-sectional diagram of Fig. 7 (a) viewed in the direction of arrow A;
Fig. 8 (a) is a graph illustrating comparatively maximum residual stress in a case where no low-hardness layer is provided and a case in which a low-hardness layer is provided, to illustrate the residual-stress reducing effect obtained by the low-hardness layer of the second embodiment;
Fig. 8(b) is a schematic perspective-view diagram illustrating a specimen used for residual stress measurement and illustrating the measurement position of the specimen; and
Fig. 9 is a cross-sectional diagram illustrating the structure of an ordinary steam turbine.

### BEST MODE FOR CARRYING OUT THE INVENTION

Embodiments of an erosion prevention method using the present invention are explained in detail next with reference to accompanying drawings.

### [First embodiment]

### [Configuration]

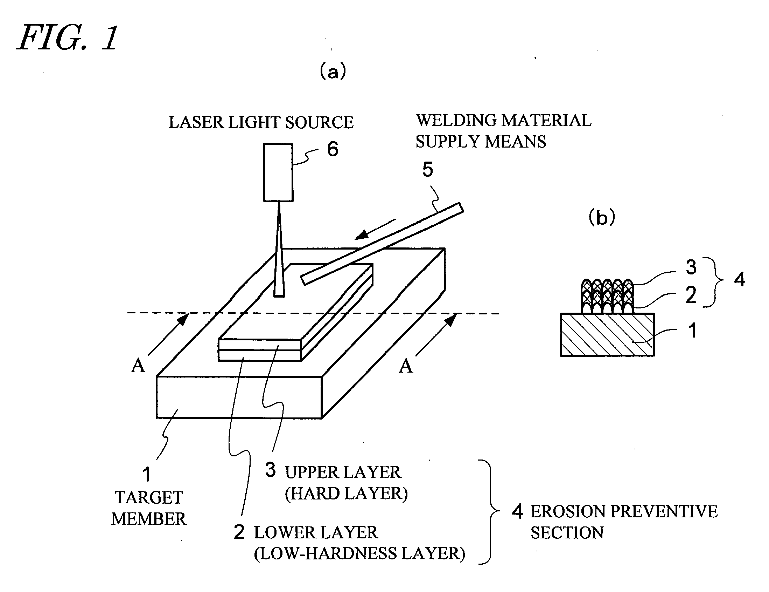

Fig. 1(a) is an image diagram illustrating an erosion prevention method according to a first embodiment of the present invention. Fig. 1(b) is a schematic cross-sectional diagram of Fig. 1(a) viewed in the direction of arrow A.

As illustrated in Fig. 1, an erosion preventive section 4, comprising a lower layer (low-hardness layer) 2 of an austenitic material, and an upper layer (hard layer) 3 of a hard material, such as stellite, harder than the low-hardness layer 2, is formed by laser build-up welding on an erosion prevention target portion of a target member 1, such as a turbine rotor blade, that is used in an erosive environment, i.e. a portion susceptible to erosion caused by liquid droplets and solid particles in a use environment. Specifically, laser build-up welding is carried out through irradiation of a laser beam from a laser light source 6 while a welding material supply means 5 supplies an austenitic material and a hard material in the form of, for instance, a rod, powder or the like.

Herein, "portion susceptible to erosion caused by liquid droplets and solid particles in the use environment" refers to portions of the target member 1 where operation speed is locally high, such as portions of high peripheral speed in the vicinity of the tip of a turbine rotor blade. Erosion-susceptible portions include also locally thin portions, or portions of large local surface area per volume, such as peripheral edge portions of the target member 1.

Examples of the hard material used in the upper layer (hard layer) 3 in the present embodiment, include, for instance, a cobalt alloy such as stellite, while examples of the austenitic material used in the lower layer (low-hardness layer) 2 include, for instance, an austenitic stainless steel such as 18-8 stainless steel, or a solid-solution hardened Ni base alloy. Table 1 below sets forth the denominations of specific materials that can be used as the hard material of the upper layer (hard layer) 3 and the austenitic material of the lower layer (low-hardness layer) 2.

**[Table 1]**

| Material of hard layer | |
|---|---|
| Stellite No. 6 | Co-28Cr-4.5W-3Fe-3Ni-1Si-1C |
| Stellite No. 12 | Co-29Cr-8.5W-3Fe-3Ni-1Si-1.4C |
| Stellite No. 21 | Co-27Cr-5.5Mo-3Fe-3Ni-1.5Si-0.25C |

| Material of low-hardness layer | |
|---|---|
| Inconel 600 | Ni-15.5Cr-8Fe |
| Inconel 625 | Ni-21.5Cr-9Mo-3.7(Ta+Nb)-2.5Fe-0.1C |

By using thus an austenitic stainless steel or a solid-solution hardened Ni base alloy as the lower layer (low-hardness layer) 2 of the erosion preventive section 4 having a 2-layer structure, the present embodiment affords a capability of preventing cracking in the use environment by relaxing residual stress due to build-up welding, or a capability of holding back or delaying crack propagation when cracking occurs in the upper layer (hard layer) 3.

### [Operation and effect]

The operation and effects obtained by the first embodiment are as follows. Specifically, the present embodiment allows solving the problems that arise during direct build-up welding of a hard layer of stellite or the like onto the matrix of the target member 1, by forming an erosion preventive section 4 having a lower and upper 2-layer structure, thereby interposing an austenitic layer (low-hardness layer), of comparatively low hardness, between the matrix and the hard layer, without forming the hard layer directly on the matrix of the target member 1.

Firstly, the matrix of the target member 1 and the hard material of the upper layer (hard layer) 3 do not mix with each other, and hence using a material having a low carbon content as the austenitic material of the lower layer 2 allows preventing the problem of carbon dilution that occurs when a material rich in carbon content is directly build-up welded onto the matrix, and allows improving the reliability of the welding operation. When, for instance, the matrix of the target member 1 is of iron base, the problem of carbon dilution in the hard layer can be effectively prevented, and reliability in the welding operation can be considerably improved, by using as the material of the lower layer 2 a solid-solution hardened Ni base alloy such as the one given in Table 1, being an austenitic material containing no carbon in solid solution.

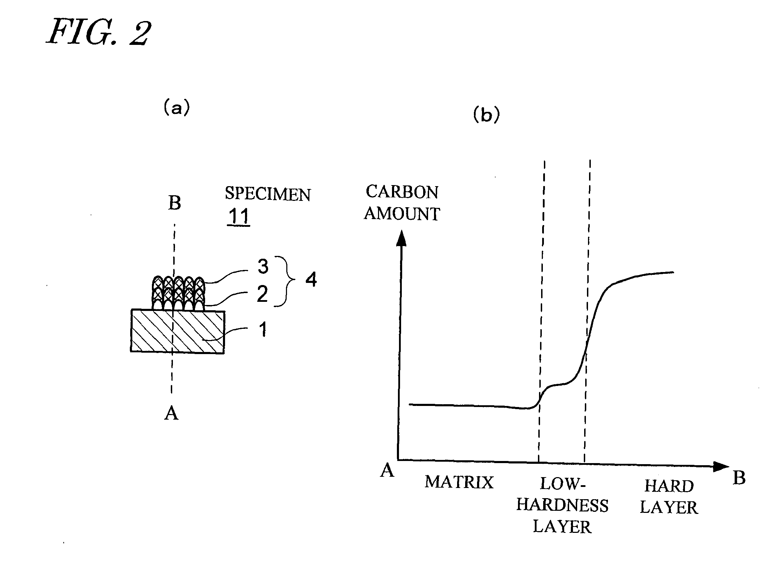

Fig. 2 is a diagram illustrating results of carbon analysis in the cross-sectional structure, from the matrix to a hard layer, of a specimen in which an upper layer (hard layer) of a stellite 3 and a lower layer (low-hardness layer) 2 of a solid-solution hardened Ni base alloy, containing no carbon in solid solution, are build-up welded by laser onto an iron-base matrix of a target member 1. Fig. 2(a) is a schematic cross-sectional diagram illustrating a specimen 11, and Fig. 2(b) is a graph illustrating the carbon amount along line AB in Fig. 2(a). As Fig. 2 shows, the problem of carbon dilution in the hard layer can be effectively prevented by providing the low-hardness layer holding no carbon in solid solution.

Also, forming a lower layer (low-hardness layer) 2 of an austenitic material comparatively less hard than the material of the upper layer (hard layer) 3, between the matrix of the target member 1 and the upper layer (hard layer) 3, allows relaxing the residual stresses (tensile residual stresses) of contraction due to build-up welding, which are considerable when the hard layer 3 is directly build-up welded onto the matrix. This is expected to be highly effective in preventing cracking caused by such residual stresses, during manufacture and in the use environment.

The first embodiment, thus, ensures reliability during manufacture and in the use environment, and allows affording an erosion prevention capability, in an inexpensive manner, by interposing an austenitic layer between the matrix of a target member and a hard layer, through build-up welding by laser at portions susceptible to erosion caused by liquid droplets and solid particles in the environment in which a target member is used, without forming the hard layer directly on the matrix of the target member.

In particular, by using an austenitic stainless steel or a solid-solution hardened Ni base alloy as the lower layer (low-hardness layer) 2 of the erosion preventive section 4 having a 2-layer structure, the present embodiment affords a capability of preventing cracking in the use environment, or a capability of holding back or delaying crack propagation when cracking occurs in the upper layer (hard layer) 3, by relaxing residual stress due to build-up welding. These capabilities are explained below.

In the present embodiment, residual stresses are firstly reduced in the upper layer (hard layer) 3, and the risk of stress corrosion cracking is lowered by interposing, between the matrix of the target member 1 and the upper layer (hard layer) 3, a lower layer (low-hardness layer) 2 using an austenitic stainless steel or a solid-solution hardened Ni base alloy having a lower strength and hardness than the hard material, such as stellite, that makes up the hard layer 3.

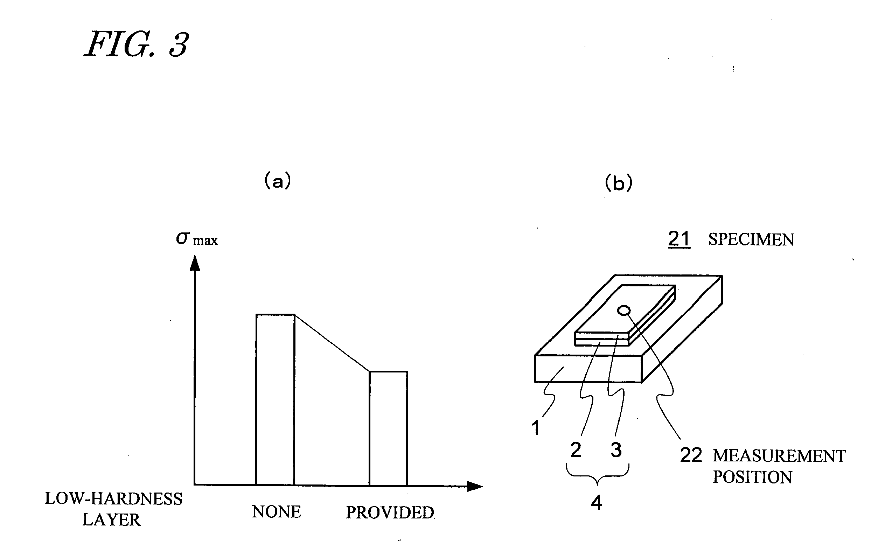

Fig. 3 is a diagram illustrating the residual-stress reducing effect obtained by the low-hardness layer 2 in such an embodiment. Fig. 3 (a) is a graph illustrating comparatively the maximum residual stress σmax in a case where no low-hardness layer is provided (conventional example) and a case where a low-hardness layer is provided (present embodiment). Fig. 3(b) is a schematic perspective-view diagram illustrating a specimen 21 used for residual stress measurement, and illustrating the measurement position 22 during measurement.

In the present embodiment, moreover, the lower layer (low-hardness layer) 2, comparatively less hard than the upper layer (hard layer) 3, is interposed between the matrix of the target member 1 and the hard layer 3. Therefore, should any crack occur in the hard layer 3, the low-hardness layer 2 allows holding back or delaying propagation of the crack beyond the hard layer 3.

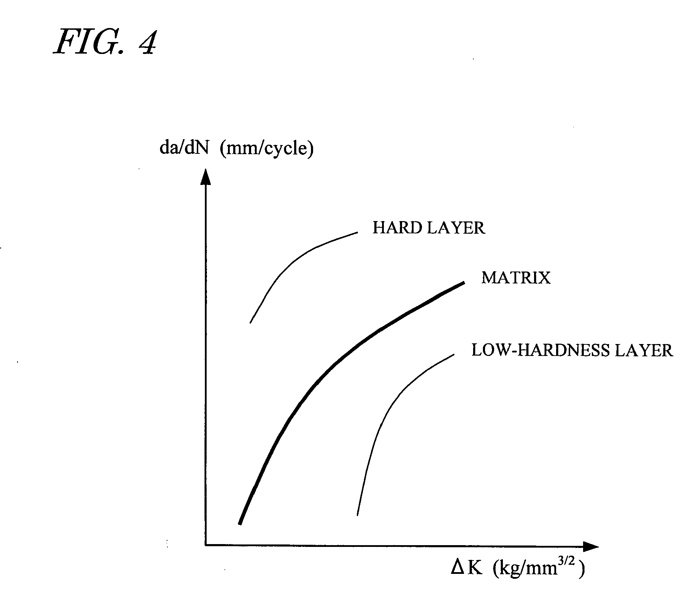

Fig. 4 is a diagram illustrating the crack propagation delaying effect or propagation preventing effect obtained by the low-hardness layer 2 of the present embodiment. In particular, Fig. 4 is a graph illustrating the results of a fatigue crack propagation test.

### [Modification of the first embodiment]

In a modification of the above-described first embodiment, hardness can be made to change gradually from the matrix of the target member 1 to the upper layer (hard layer) 3 of the erosion preventive section 4 through build-up welding of two or more materials, having dissimilar hardness, as the lower layer (low-hardness layer) 2 of the erosion preventive section 4 having a 2-layer structure.

This modification allows increasing reliability, during manufacture and in the use environment, through build-up welding of two or more materials, having dissimilar hardness, as the lower layer (low-hardness layer) 2. As described above, the upper hard layer is considerably effective for preventing erosion, but is also extremely hard, which may promote cracking. Therefore, crack promotion arising from the hardness of the hard layer can be suppressed, and reliability can be enhanced, by interposing two or more materials between the matrix and the hard layer, to cause thereby hardness to change gradually between the matrix and the hard layer.

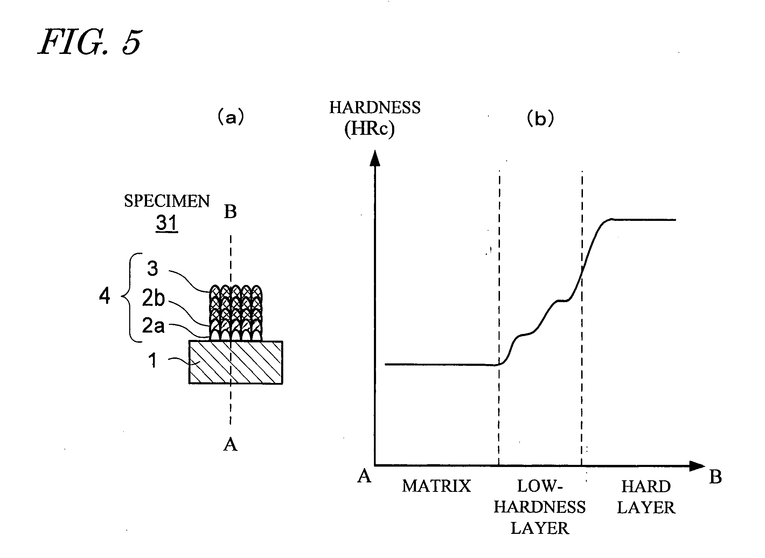

For instance, a first lower layer (low-hardness layer) 2a using Inconel 600, a second lower layer (low-hardness layer) 2b using harder Inconel 625, and a upper layer (hard layer) 3 using stellite No. 6, having excellent erosion prevention characteristics, are overlaid in this order on an iron-base matrix of the target member 1, as illustrated in Fig. 5(a), to manufacture a specimen 31 having an erosion preventive section 4 that comprises essentially a 3-layer structure.

Fig. 5(b) is a graph illustrating evaluation results on the cross-sectional hardness of a specimen 31 having the erosion preventive section 4 with the 3-layer structure illustrated in Fig. 5(a). As illustrated in Fig. 5(b), the hardness of the specimen 31 with the erosion preventive section 4 having the 3-layer structure changes smoothly from the matrix towards the hard layer. This inhibits crack promotion, brought about by the hardness of the hard layer, and allows increasing reliability.

In another modification, hardness may be caused to change gradually from the matrix of the target member 1 to the upper layer (hard layer) 3 of the erosion preventive section 4 through build-up welding of three or more materials having dissimilar hardness, as the lower layer (low-hardness layer) 2 of the erosion preventive section 4 having a 2-layer structure. In this case there is formed the erosion preventive section 4 having a multilayer structure with substantially four or more layers, whereby cross-sectional hardness can change yet more smoothly from the matrix to the hard layer.

### [Second embodiment]

### [Configuration]

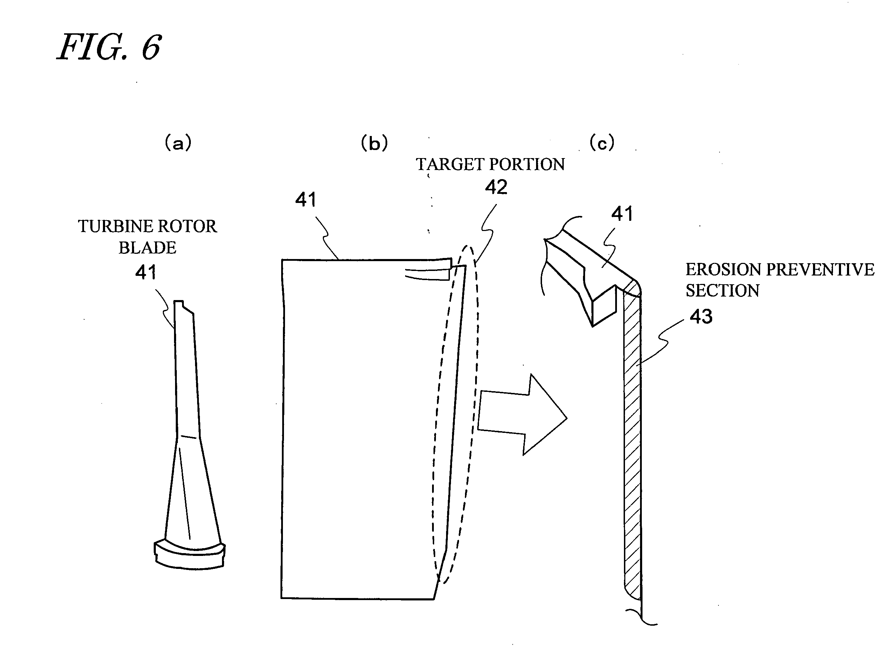

Fig. 6 illustrates an example of an erosion prevention method according to a second embodiment of the present invention. Fig. 6(a) is a perspective-view diagram illustrating a turbine rotor blade 41; Fig. 6(b) is an enlarged diagram illustrating the tip of the turbine rotor blade 41 illustrated in Fig. 6(a); and Fig. 6(c) is a perspective-view diagram illustrating a state in which an erosion preventive section 43 replaces a target portion 42 (portion enclosed by a broken line) at the tip of the turbine rotor blade 41.

As illustrated in Fig. 6, the erosion prevention method of the present embodiment is an erosion prevention method in which the target member is a turbine rotor blade 41 being used in an erosive environment. The leading edge portion of the turbine rotor blade 41 is the target portion 42 that requires erosion countermeasures. The erosion preventive section 43 is provided through laser-fusion of a hard material powder that is then build-up welded, to replace locally part of the blade shape by the hard material. The above-described Patent document 1 resorts to a buttering scheme whereby build-up welding is conducted on the matrix forming a blade shape. By contrast, buttering is not used in the present embodiment, which resorts to a scheme for forming a blade shape in which only part of the blade shape is replaced by being re-formed through build-up welding.

That is, as illustrated in Fig. 6(b), the target portion 42 that requires erosion countermeasures in the turbine rotor blade 41 is cut off, and then the erosion preventive section 43 is provided at the cut-off portion through build-up welding of a powdery hard material. In other words, the erosion preventive section 43 is re-formed as the erosion preventive section 43, as illustrated in Fig. 6(c).

Herein, the "target portion requiring erosion countermeasures" denotes a "portion susceptible to erosion by liquid droplets and solid particles in an use environment", and includes, for instance, portions of the target member where operation speed is locally high, such as portions of high peripheral speed in the vicinity of the tip of the turbine rotor blade 41, or locally thin portions, or portions of large local surface area per volume, such as peripheral edge portions of the target member.

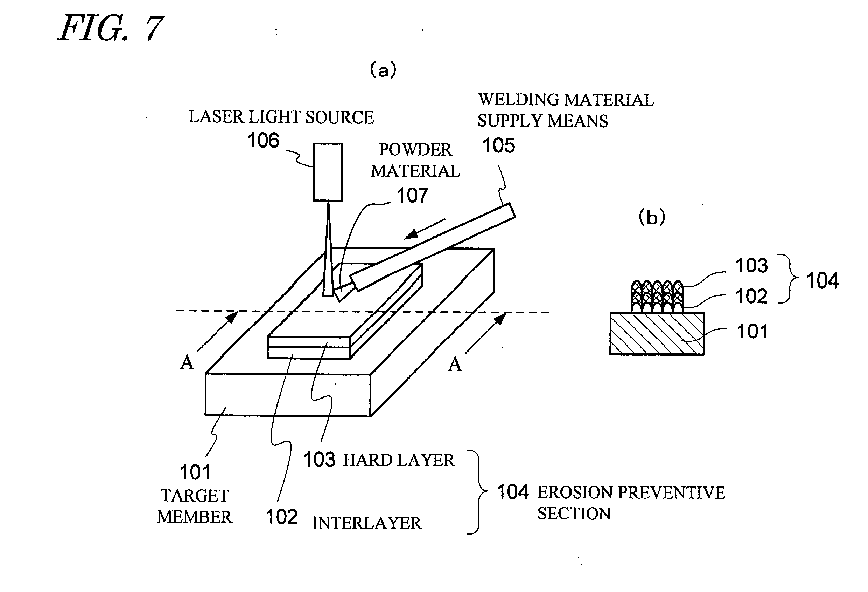

A procedure in the present embodiment is schematically explained next with reference to Fig. 7. Fig. 7 is a diagram for explaining schematically a procedure in the present embodiment. Fig. 7(a) is an image diagram illustrating an erosion prevention method according to the present embodiment; and Fig. 7(b) is a schematic cross-sectional diagram of Fig. 7(a) viewed in the direction of arrow A. As illustrated in Fig. 7, a powder material 107 that constitutes the material of an interlayer 102 and a hard layer 103 is supplied by a welding material supply means 105 onto a portion of a target member 101, such as the turbine rotor blade 41, that is susceptible to erosion caused by liquid droplets and solid particles during operation of the turbine rotor blade 41. Laser build-up welding is carried out through laser irradiation from a laser light source 106, as the powder material is being supplied, to form as a result an erosion preventive section 104 having an upper and lower 2-layer structure.

The interlayer 102 is a portion formed by laser fusion and build-up welding of a powder of a material excellent in ductility and toughness. The interlayer 102 is formed to a thickness of about 0.5 to 3 mm at an intermediate portion between the hard layer 103 and the target member 101. Examples of materials that make up the interlayer 102 include, for instance, an austenitic stainless steel having lower strength and hardness than a hard material such as stellite, or, in particular, a solid-solution hardened Ni base alloy, having an austenitic structure and containing no carbon in solid solution.

The hard layer 103 is a portion formed by laser fusion and build-up welding of a hard material powder of a cobalt alloy such as stellite or the like. The hard layer 103 is formed to a thickness not smaller than 5 mm.

Specific examples of the materials used in the interlayer 102 and the hard layer 103 in the present embodiment may be the same as the materials of the low-hardness layer and the materials of the hard layer for the first embodiment, as given in Table 1.

### [Operation and Effect]

The operation and effects obtained by the above-described second embodiment are as follows. In the present embodiment, specifically, the blade leading edge portion, being a portion of the blade shape of the turbine rotor blade 41, is fixed on the target portion 42 that requires erosion countermeasures. This target portion 42 is cut off and is re-formed, by laser build-up welding, as the erosion preventive section 43. The erosion-susceptible portion of the turbine rotor blade 41 can be afforded thereby with an excellent erosion-preventing capability, so that reliability can also be enhanced as a result. This effect can be significantly brought out, in particular, in erosion prevention of a long, thin turbine rotor blade 41 using a high-strength material.

Conventional procedures involve cutting off the target portion 42 that requires erosion countermeasures, followed by welding of a forged part of a shape identical to the cutoff shape. As described above, this approach incurs high costs and is disadvantageous in economic terms.' In contrast to this conventional approach, in the present embodiment only the cutoff portion is re-formed through laser build-up welding of a hard material powder. This approach is expected to be highly effective in reducing manufacturing costs.

In the present embodiment, moreover, an interlayer 102 not smaller than 0.5 mm is interposed between the matrix of the target member 101 and the hard material 103, and thus the hard material 103 is not formed directly on the matrix of the target member 101. Doing so offers the following advantages. Firstly, the matrix of the target member 1 and the hard material of the hard layer 103 do not mix with each other. Therefore, using in the interlayer 102 a material having a low carbon content allows avoiding the formation of a carbon dilution layer that occurs when a material rich in carbon content is directly build-up welded onto the matrix. When the matrix of the target member 1 is an iron base, therefore, formation of a carbon dilution layer in the hard layer 103 can be prevented with high effectiveness, and reliability of the welding operation can be improved considerably, by using as the interlayer 102 a Ni base alloy containing no carbon in solid solution.

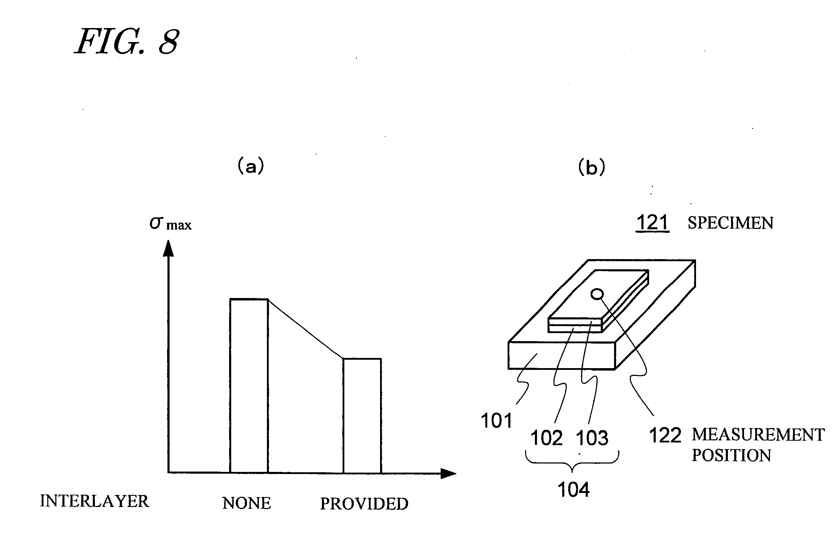

Also, the presence of the interlayer 102 is considerably effective against cracking at welded metal portion, or breakage as occurs when the end of the build-up portion peels off on account of residual stresses (tensile residual stresses) resulting from contraction during manufacturing. This feature is explained with reference to Fig. 8. Fig. 8 (a) is a graph for explaining the residual-stress reducing effect obtained by the interlayer 2. Fig. 8 illustrates measurement results of maximum residual stress when the interlayer 102 is not provided (conventional example) and of maximum residual stress when the interlayer 102 is provided (present embodiment).

As the graph clearly shows, the maximum residual stress in the present embodiment, where the interlayer 102 is provided, exhibits a low value. The risk of stress corrosion cracking can thus be reduced, and occurrence of cracking in the end of the build-up portion and weld metal portion, caused by residual stresses, can also be reliably prevented. Fig. 8(b) is a schematic perspective-view diagram illustrating a specimen 121 used for residual stress measurement, and illustrating the measurement position 122.

Should any crack occur in the hard layer 103, the interposed interlayer 102 allows holding back or delaying propagation of the crack beyond the hard layer 103. The upper limit of the thickness of the interlayer 102 is 3 mm, and hence there can be secured both high cycle fatigue strength of welded joints as well as erosion resistance of the interlayer exposed at the blade surface.

In the present embodiment, moreover, build-up welding can be carried out under low heat input conditions by forming the interlayer 102 through laser welding using the powder material 7. This allows avoiding deterioration of material characteristics in the matrix of the target member 1 caused by the welding heat input. In a welding operation using ordinarily EBW or TIG, the heat-affected portion of the matrix is of 1 mm or greater. In the present embodiment, by contrast, the heat-affected portion is kept not greater than 1 mm.

A cobalt base alloy such as stellite is used as the hard material that makes up the hard layer 103. However, the overlay height of the cobalt base alloy, which is excellent in erosion resistance, affects directly the damage condition of the member over time. When the matrix is a member comprising an iron base alloy, therefore, the erosion rate of the cobalt base alloy can be improved to half or less than that of the matrix of iron-base alloy. When using a hard material 103 of cobalt-base alloy in the turbine rotor blade 41, erosion of the blade leading edge portions starts in the vicinity of the edge portions. As a result, the erosion preventive effect can be further enhanced by using a cobalt-base alloy having a thickness not smaller than 5 mm, as in the present embodiment.

### [Modification of the second embodiment]

The various below-described methods may be conceivable modifications of the second embodiment above.

In the second embodiment, the erosion preventive section 104 has a 2-layer structure. However, the hardness of the erosion preventive section 104 may be caused to change gradually through build-up welding of three or more materials having dissimilar hardness. Such a modification allows further smoothing the change of cross-sectional hardness from the matrix to the hard layer, thereby further reducing residual stresses.

During build-up welding through laser fusion of a powder material, there can also be used a method of overlaying multiple layers of low heat-input welding beads to a thickness not greater than 1 mm per pass. When forming the tip portion of the leading edge of the turbine rotor blade 41 using such an erosion prevention method, multiple layers of low heat-input welding beads are overlaid to a thickness not greater than 1 mm per pass, whether for the interlayer 102 or the hard layer 103. This embodiment allows holding back deterioration of material characteristics in the matrix, or blade deformation, that results from welding heat input. In particular, lack of fusion during the welding operation can be reliably prevented thanks to a thickness not greater than 1 mm per pass.

The erosion preventive section 104 may also be provided by build-up welding using a laser beam, through multilayer build-up using stellite as the hard layer 103 and using, as the interlayer 102, an austenitic stainless steel, having a large coefficient of linear expansion preheated to 150°C or above at the time of welding. That is, residual stresses tend to become larger, on account of greater welding contraction, when using a stellite powder in the hard layer 103. Therefore, residual stresses can be reduced by providing the interlayer 102, having a large coefficient of linear expansion, preheated at 150°C. This is effective in suppressing, yet more reliably, cracking at weld metal portion and peeling of the end of the build-up portion that occur on account of residual stresses (tensile residual stresses) resulting from contraction during manufacturing. Reliability during manufacture and operation is enhanced as a result.

An erosion prevention method can also be used in which the welded portions are abrasively finished after build-up welding by laser fusion. In such a method, the surface can be afforded a smooth finish through polishing of the welded portions. This allows holding back as a result loss of fatigue strength or deterioration of turbine blade performance on account of the notch effect at the welding bead ends.

When the material of the member is precipitation-hardened steel, a post-weld aging heat treatment may also be carried out again after laser build-up welding in a solution-treated and aged state. Ordinarily, members whose material is precipitation-hardened steel exhibit poor weldability on account of increased matrix strength after an aging heat treatment. Therefore, welding is carried out in a solution state. The present procedure keeps the welding heat input small by laser, so that welding is possible also in the state that results after aging heat treatment. After welding, solution-state sites appear in heat-affected portions of the matrix. As a result, matrix strength can be restored by carrying out again a post-weld aging heat treatment, to restore welded joint strength.

### [Other embodiments]

The present invention is not limited to the above-described first and second embodiments and modifications thereof. Numerous other modifications can be realized without departing from the scope of the invention. For instance, the materials recited in the embodiments are but exemplary in nature. Various other materials can be appropriately selected as the materials used in the hard layer, low-hardness layer and interlayer of the present invention.

Although the present invention is ideal as an erosion prevention method where a turbine rotor blade is a target member, the present invention can also be used for other turbine components, such as turbine stator blades, to obtain the same outstanding effects. Likewise, the present invention can be applied to various members that are used in erosive enviornments, in all manner of equipment other than turbines, to obtain the same outstanding effects.

The above embodiments have been explained using a laser beam as a form of high-density energy irradiation. The present invention, however, is not limited to laser beams, and may be also be used with other kinds of high-density energy irradiation such as electron beams, to obtain the same outstanding effects.

## Claims

1. A method for preventing erosion of a member used in an erosive environment, comprising:
providing an erosion preventive section, which has a multilayer structure, on a matrix of an erosion prevention target portion of a target member, through formation of a lower layer of an austenitic material and an upper layer of a material harder than the lower layer, by build-up welding in use of high-density energy irradiation.

2. The method for preventing erosion according to claim 1, wherein an austenitic stainless steel or a solid-solution hardened Ni base alloy is used as the lower layer of the erosion preventive section, whereby the lower layer is afforded with a capability of preventing occurrence of cracking in use environment by relaxing residual stress due to build-up welding, or a capability of delaying or preventing crack propagation should cracking occur in the hard upper layer.

3. The method for preventing erosion according to claim 1, wherein hardness is made to change gradually from the matrix of the target member to the upper layer of the erosion preventive section, by build-up welding of two or more materials having dissimilar hardness, as the lower layer of the erosion preventive section.

4. The method for preventing erosion according to claim 1, wherein when the target member is a turbine rotor blade, part of a blade shape thereof is formed by build-up welding.

5. A member to be used in an erosive environment, comprising an erosion preventive section, which has a multilayer structure provided on the matrix of an erosion prevention target portion of the member, through formation of a lower layer of an austenitic material and an upper layer of a material harder than the lower layer, by build-up welding in use of high-density energy irradiation.

6. A method for preventing erosion of a member used in an erosive environment, comprising:
providing an erosion preventive section by replacing locally part of the member with a hard layer that is formed by build-up welding, through fusion of a powder of a hard material by high-density energy irradiation.

7. The method for preventing erosion according to claim 6, wherein the member is a turbine blade, and the erosion preventive section is provided on a blade leading edge portion of the turbine blade.

8. The method for preventing erosion according to claim 6, wherein an interlayer comprising a material more excellent in ductility and toughness is formed at an intermediate portion between the matrix of the member and the hard layer.

9. The method for preventing erosion according to claim 3, wherein the interlayer is formed to a thickness of 0.5 to 3.0 mm.

10. The method for preventing erosion according to claim 8, wherein the interlayer is formed by build-up welding, through fusion of a powder of the material having more excellent ductility and toughness, by high-density energy irradiation.

11. The method for preventing erosion according to claim 10, wherein when build-up welding through fusion by high-density energy irradiation, multiple layers are laid using an austenitic stainless steel having a larger coefficient of linear expansion, as a material having more excellent ductility and toughness, preheated to 150°C or above at the time of welding.

12. The method for preventing erosion according to claim 8, wherein a solid-solution hardened Ni base alloy is used as the material having more excellent ductility and toughness.

13. The method for preventing erosion according to claim 6, wherein a cobalt-base alloy is used as the hard material, whereby the hard layer is formed to a thickness not smaller than 5 mm.

14. The method for preventing erosion according to claim 6, wherein multiple layers of low heat-input welding beads are laid to a multiple layer height not greater than 1 mm per pass, during build-up welding through fusion by high-density energy irradiation.

15. The method for preventing erosion according to claim 6, wherein a welded portion is finished by polishing after build-up welding through fusion by high-density energy irradiation.

16. The method for preventing erosion according to claim 6, wherein when the material to be used for the member is precipitation-hardened steel, a post-weld aging treatment is carried out again after build-up welding through fusion by high-density energy irradiation, in a solution-treated and aged state.

17. A member to be used in an erosive environment, comprising:
an erosion preventive section provided by replacing locally part of the member with a hard layer that is formed by build-up welding, through fusion of a powder of a hard material by high-density energy irradiation.
